## Europäisches Patentamt
## European Patent Office
## Office européen des brevets

(11) Veröffentlichungsnummer: **0 096 757**
**B1**

# EUROPÄISCHE PATENTSCHRIFT

(45) Veröffentlichungstag der Patentschrift:
03.09.86

(21) Anmeldenummer: 83104907.7

(22) Anmeldetag: 18.05.83

(51) Int. Cl.⁴: **C 25 D 5/36, F 16 B 33/00**

(54) **Verbindungselement aus Stahl mit einer galvanischen Oberflächenschicht.**

(30) Priorität: 02.06.82 DE 3220749

(43) Veröffentlichungstag der Anmeldung:
28.12.83 Patentblatt 83/52

(45) Bekanntmachung des Hinweises auf die Patenterteilung:
03.09.86 Patentblatt 86/36

(84) Benannte Vertragsstaaten:
AT BE CH FR GB IT LI NL SE

(56) Entgegenhaltungen:
DE-C-904 490
FR-A-499 522

CHEMICAL ABSTRACTS, Band 55, 1961, Spalte 24314h, Columbus, Ohio, USA WALTER BECK et al.:"The effectiveness of metallic undercoats in minimizing plating embrittlement of ultrahigh-strength steel"

(73) Patentinhaber: **Rommel, Erwin, Ringstrasse 11, D-4320 Hattingen (DE)**

(72) Erfinder: **Dicke, Robert, Dipl.- Ing., Brinkerstrasse 4, D-5828 Ennepetal 13 (DE)**

(74) Vertreter: **Patentanwälte Dr. Solf & Zapf, Schlossbleiche 20 Postfach 13 01 13, D-5600 Wuppertal 1 (DE)**

**Beschreibung**

Die Erfindung betrifft ein Verbindungselement aus Stahl mit einer galvanischen Oberflächenschicht aus Metall und einer unter der Oberflächenschicht auf dem Elementkörper angeordneten nicht galvanischen Diffusionssperrschicht.

Verbindungselemente der vorstehenden Art sind insbesondere Schrauben, Niete, Bolzen u.dgl., wobei das Stahlmaterial eine Festigkeit von 100 N/mm² und mehr besitzt.

Während des Galvanisierungsprozesses entsteht im galvanischen Bad unvermeidlich atomarer Wasserstoff.

Dieser atomare Wasserstoff wird von dem Stahl der zu beschichtenden Elemente aufgenommen, was zu einer Versprödung des Stahles und folglich bei einer späteren Verwendung der Verbindungselemente zu verzögerten Sprödbrüchen führt.

Aus der FR-A 499 522 ist ein Verfahren bekannt, mit dem dieser Effekt dadurch verhindert wird, daß eisenhaltige Metalle, insbesondere Federstahl, vor Aufbringen einer galvanischen Oberflächenschicht mit einer nicht galvanischen Zwischenschicht versehen werden. Diese Zwischenschicht hat die Aufgabe, das Eindringen des atomaren Wasserstoffes in den Stahl zu verhindern. Folglich stellt diese Zwischenschicht eine Diffusionssperrschicht für den atomaren Wasserstoff dar. Dabei wird die Zwischenschicht aus Zinn durch Eintauchen der Bauteile in ein Schmelzbad aufgebracht, wozu Temperaturen von 230° bis 300° Celsius erforderlich sind. Eine solche Zinnschicht ist für die stark beanspruchten Verbindungselemente nicht geeignet. Zudem ist dieses Verfahren für die Herstellung der beschriebenen Verbindungselemente, bei denen es sich um Massenartikel handelt, aufwendig und teuer.

Der Erfindung liegt daher die Aufgabe zugrunde, ein Verbindungselement zu schaffen, das wirtschaftlich als Massenprodukt herstellbar ist, bei dem aber dennoch Sprödbrüche aufgrund atomarer Wasserstoffaufnahme ausgeschlossen sind.

Erfindungsgemäß wird dies dadurch erreicht, daß die Diffusionssperrschicht aus einer durch kaltaufschweibung mechanisch aufgetragenen Metallschicht besteht. Dabei handelt es sich insbesondere um eine Kupferschicht. Eine Schichtdicke von ca. 2 µm ist vorteilhaft. Das erfindungsgemäße mechanische Auftragen der Kupferschicht durch eine Kaltaufschweißung bietet den Vorteil eines geringen Energiebedarfes. Ein weiterer Vorteil der Erfindung besteht darin, daß auf die erfindungsgemäße Kupferschicht jede beliebige galvanische Oberflächenschicht aufgebracht werden kann. So können z.B. Nickel, Chrom oder auch Messingbeschichtungen neben der üblichen Zinkbeschichtung aufgebracht werden. Dies war bei der bekannten Schicht aus Zinn in diesem Umfang nicht der Fall.

Weitere vorteilhafte Merkmale der Erfindung sind in der folgenden Beschreibung enthalten.

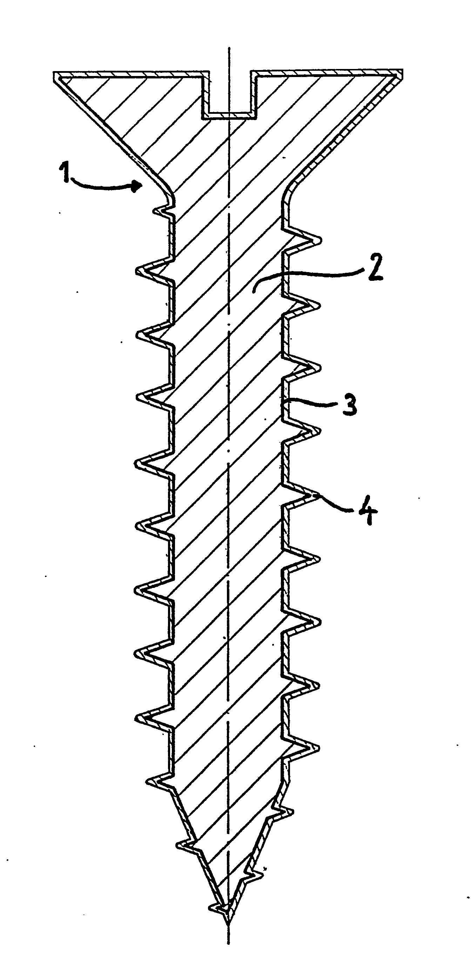

Anhand der beiliegenden Zeichnung wird die Erfindung näher erläutert.

In der Zeichnung ist als Verbindungselement eine Schraube 1 dargestellt, die einen Schraubenkörper 2 aus einem Stahl mit einer Festigkeit von ca. 100 N/mm² und mehr besitzt. Auf dem Schraubenkörper 2 ist eine Diffusionssperrschicht 3 aus Kupfer mechanisch aufgetragen. Diese Kupferschicht besitzt zweckmäßigerweise eine Dicke von ca. 2 µm. Das mechanische Auftragen dieser Kupferschicht erfolgt durch eine Kaltaufschweißung von reinem Kupferpulver auf den Schraubenkörper.

Das Auftragen der erfindungsgemäßen Kupferschicht erfolgt vorteilhafterweise in Glocken- oder Scheuertrommeln. Hierbei ist die Prozeßfolge wie folgt. Zunächst wird die Maschine mit den Schraubenkörpern gefüllt. Danach erfolgt ein Reinigen der Schraubenkörper unter Zuhilfenahme geringer Mengen eines schwachen Beizentfetters. Das Aufbringen der Kupferschicht erfolgt danach durch Zugabe von reinem Kupferpulver in die Maschine. Bei dem Reinigen und dem Aufbringen der Kupferschicht wird die durch die Maschine verursachte mechanische Bewegung der Teile untereinander bzw. gegenüber einem zweiten Medium, z. B. Quarz ausgenutzt, so daß mit relativ geringen Lösungszusätzen gearbeitet werden kann. So ist z. B. die Reinigung der Schraubenkörper beim erfindungsgemäßen Verfahren wesentlich schneller und gründlicher als in einem galvanischen Beizbad. Das Aufbringen der Kupferschicht auf das Stahlmaterial des Schraubenkörpers erfolgt mechanisch und wird unterstützt durch die aus dem Spannungsgefälle der beiden Metalle -Stahl, Kupfer- hervorgerufene Elektrolyse in der die Schraubenkörper benetzenden Beizentfetterlösung. Durch die starke Reibung der Teile untereinander wird das zugegebene Kupferpulver durch entstehende Kaltaufschweißung aufgebracht. Nach dem Aufbrauch des zugegebenen Kupferpulvers wird durch den weiterhin aufrechterhaltenen mechanischen Prozeß die Oberfläche der Teile verdichtet und geglättet.

Danach erfolgt in einem üblichen galvanischen Verfahren das Aufbringen der Oberflächenschicht 4 aus Metall. Hierbei kann es sich um eine Zinkschicht handeln, wie dies bisher üblich ist, oder es können auch andere metallische galvanische Schichten aufgebracht werden, so z.B. eine Nickel- oder eine Messingschicht. Durch die erfindungsgemäß mechanisch aufgebrachte Kupferschicht als Diffusionssperre wird bei dem abschließenden Galvanisieren verhindert, daß atomarer Wasserstoff in den Stahlkörper eindringen kann.

**Patentansprüche**

1. Verbindungselement aus Stahl mit einer galvanischen Oberflächenschicht aus Metall und einer unter der Oberflächenschicht auf dem Elementkörper angeordneten nicht galvanischen Diffusionssperrschicht,
dadurch gekennzeichnet,
daß die Diffusionssperrschicht (3) aus einer: durch kaltaufschweißung mechanisch aufgetragenen Metallschicht besteht.

2. Verbindungselement nach Anspruch 1, dadurch gekennzeichnet, daß die Diffusionssperrschicht (3) aus Kupfer besteht.

3. Verbindungselement nach Anspruch 2, dadurch gekennzeichnet, daß die Kupferschicht (3) eine Dicke von ca 2 μm besitzt.

**Claims**

1. A steel connecting element having a galvanic outer layer of metal and a non-galvanic diffusion barrier layer present on the element body under the outer layer characterised in that the diffusion barrier layer (3) comprises a mechanically carried metal layer applied by cold welding.

2. A connecting element according to Claim 1 caracterised in that the diffusion barrier layer (3) comprises copper.

3. A connecting element according to Claim 2 characterised in that the copper layer (3) has a thickness of about 2 μm.

**Revendications**

1. Elément de fixation en acier à couche galvanique extérieure de métal et à couche de blocage de la diffusion, disposée sur le corps de l'élément sous la couche exterieure,
caractérisé en ce que la couche de blocage de la diffusion (3) consiste en une couche métallique appliquée mécaniquement par soudure à froid.

2. Elément de fixation selon la revendication 1, caractérisé en ce que la couche de blocage de la diffusion (3) est en cuivre.

3. Elément de fixation selon la revendication 2, caractérisé en ce que la couchede cuivre (3) a une épaisseur d'environ 2 μm.